# FASCICULE DE BREVET EUROPEEN

(11) **EP 3 912 230 B1**
(45) Date de publication et mention de la délivrance du brevet: **16.11.2022**
(21) Numéro de dépôt: 20700406.0
(22) Date de dépôt: 16.01.2020
(51) Int. Cl.: H01R 4/48, H01R 43/16, F16F 1/18, H01R 9/24

(54) **LAME RESSORT D'UNE BORNE DE CONNEXION À SERRAGE AUTOMATIQUE**
BLATTFEDER FÜR EINEN AUTOMATISCHEN KLEMMVERBINDUNGSANSCHLUSS
LEAF SPRING FOR AN AUTOMATIC CLAMPING CONNECTION TERMINAL

(30) Priorité: 18.01.2019 FR 1900472
(43) Date de publication de la demande: 24.11.2021
(73) Titulaire: Legrand France, 87000 Limoges (FR); Legrand SNC, 87000 Limoges (FR)
(72) Inventeur: CHAUMENY, Jean-Luc, 87590 SAINT JUST LE MARTEL (FR); LEQUEUX, Christophe, 87220 BOISSEUIL (FR); DENERF, Didier, 87110 BOSMIE L'AIGUILLE (FR)
(74) Mandataire: Cabinet Camus Lebkiri
(86) Numéro de dépôt international: PCT/EP2020/050971
(87) Numéro de publication internationale: WO 2020/148365

(56) Documents cités:
- EP-A1- 3 226 352
- EP-A2- 1 865 577
- DE-A1- 3 503 370
- FR-A1- 2 769 411

## Description

### DOMAINE TECHNIQUE DE L'INVENTION

Le domaine technique de l'invention se rapporte à une lame ressort d'une borne de connexion à serrage automatique d'au moins deux conducteurs. La borne de connexion à serrage automatique concerne d'une manière générale les bornes de connexion du type de celles équipant les appareils électriques pour leur raccordement aux conducteurs électriques du câble électrique propre à leur alimentation. L'invention vise plus particulièrement la lame ressort de ces bornes de connexion qui sont communément dites à serrage automatique, c'est-à-dire celles dont le raccordement à un conducteur électrique se fait par simple enfichage de l 'extrémité d'une âme, d'un conducteur préalablement dénudé, sans intervention d'un quelconque outil.

### ARRIERE-PLAN TECHNOLOGIQUE DE L'INVENTION

Dans le domaine des activités d'électricien, que ce soit dans le domaine des activités domestiques ou des activités industrielles, il est parfois nécessaire qu'un dispositif électrique puisse connecter deux conducteurs pour installer des dispositifs en parallèle, notamment deux conducteurs au même potentiel par exemple une phase ou un neutre ou la terre. Un conducteur comporte une âme conductrice et un isolant. Il est connu d'utiliser des bornes de connexion à serrage automatiques, appelées aussi connecteurs automatiques comprenant une lame ressort et un corps en matière conductrice, permettant ensemble de pincer deux âmes de deux conducteurs pour les relier électriquement. Le pincement des âmes conductrices du conducteurs permet ainsi de les retenir et de faire la connexion électrique entre les deux conducteurs par le biais d'une paroi de connexion du corps en matière conductrice.

Plus particulièrement, encore, la présente invention vise celles de ces bornes de connexion à serrage automatique dont la lame ressort présente au moins une branche de fixation et deux pattes de connexion reliées à la branche de fixation, séparées l'une de l'autre par une fente principale ouverte sur un bord libre de la lame et fermée au niveau de la branche de fixation. La fente principale comporte au moins une portion restreinte par exemple formée par un cisaillement de la lame. La branche de fixation est dûment assujettie à une paroi de fixation du corps, et les deux pattes de connexion interviennent librement, de manière élastiquement déformable, et comprennent chacune une bordure de connexion pour sous l'effet élastique appuyer l'âme du conducteur contre une paroi de connexion du corps, en s'étendant chacune globalement en biais par rapport à une entrée d'engagement du conducteur correspondante dans ce corps, en direction de la paroi de connexion.

Dans les bornes de connexion de ce type, la lame ressort est donc solidaire de la paroi de fixation du corps creux par sa branche de fixation, et, par ses deux branches de connexion, chacune assure le serrage du conducteur électrique contre la paroi de connexion de ce corps.

Il est connu, par exemple, du document FR2769411, une borne de connexion à serrage automatique comprenant un corps creux en matière conductrice comprenant deux entrées d'engagements pour insérer des conducteurs et une lame ressort comprenant une branche de fixation fixée au corps creux et deux pattes de connexion, appelée aussi branche de connexion, reliées chacune à la branche de fixation par un coude. Les deux pattes de connexion sont séparées l'une de l'autre à leurs extrémités libres par une portion réduite de la fente de largeur inférieure à une portion de séparation de la fente. En outre, chacune des deux pattes de connexion, par un fractionnement de leur extrémité libre, formant une deuxième fente secondaire, comprend latéralement, le long de cette portion réduite et de cette fente secondaire, une languette de déconnexion, qui, pliée sensiblement parallèlement à la branche de fixation, fait saillie sur leur partie courante du même côté que cette branche de fixation. Chacune des languettes de déconnexion sont aptes à porter sur un bord libre du retour de la paroi supérieure correspondante du corps creux. Le corps creux comporte une ouverture par une fente, appelée dans la suite ouverture de retrait, sur sa paroi supérieure pour permettre à l'utilisateur par exemple à l'aide d'un outil d'appuyer sur la languette de déconnexion pour plier la patte de connexion correspondante de manière à éloigner la bordure de connexion de l'âme du conducteur et ainsi libérer le conducteur.

En outre, la lame ressort comprend un évidement à la racine de la fente traversant la branche de fixation pour recevoir un ergot du corps creux permettant de maintenir la lame ressort par rapport au corps creux lorsque l'une des deux pattes de connexion est sollicitées.

Les deux languettes de déconnexion de deux pattes de connexion sont donc séparées l'une de l'autre par une portion restreinte de la fente comprenant une extrémité ouverte formant un jeu entre les deux portions de retrait.

La portion restreinte est de manière générale réalisée par cisaillement de même que la fente secondaire pour augmenter la largeur de la languette de déconnexion.

Il existe aussi des lames ressort plane, c'est-à-dire dépourvue de coude entre la branche de fixation et les pattes de connexion.

Le problème d'une telle lame ressort est qu'il peut arriver que les deux pattes de connexion s'accrochent l'une avec l'autre soit lors d'une insertion par exemple d'un conducteur ayant une âme de section plus importante que l'âme du conducteur de l'autre patte de connexion soit lors d'un appui par l'ouverture de retrait sur l'une des deux pattes de connexion par exemple sur les languettes de déconnexion. En effet, la portion restreinte de la fente principale peut comprendre un écartement si faible entre les deux languettes de déconnexion que les deux pattes de connexion peuvent s'accrocher l'une avec l'autre nottament par le biais des languettes de déconnexion.

C'est notamment le cas par exemple, lorsque la portion restreinte est réalisée par un cisaillement formant sur des bordures des pattes de connexion délimitant cette portion restreinte, des traces de cisaillement qui peuvent venir se toucher l'une avec l'autre. En effet, lors de la réalisation de la portion restreinte, notamment par cisaillement, dans certain cas lors de la fabrication, les bordures des pattes de déconnexion notamment celles formant les languettes de déconnexions peuvent soient avoir chacune une extrémité en contact l'une de l'autre par effet élastique soit avoir dans l'épaisseur une coupe irrégulière, c'est-à-dire non planaire. Dans ces deux cas, il est possible qu'en cas d'appui sur une patte de fixation notamment sur une languette de déconnexion, l'autre patte de connexion notamment par le biais de sa languette de déconnexion, se déforme élastiquement aussi de manière inopinée en éloignant sa bordure de connexion de l'âme du conducteur.

Cela peut être problématique pour l'utilisateur lors du branchement ou lors du débranchement qui peut retirer un fil alors qu'il ne le souhaitait pas.

Une solution est de suffisamment élargir la portion restreinte de la fente par exemple par un détourage de l'opération de cisaillement ou par emboutissage avec une presse à la place du cisaillement, pour assurer une largeur de la portion restreinte de la fente suffisante pour que bordures des pattes de connexion ne se touchent pas. Cela impose donc de diminuer la largeur des pattes de connexion, notamment soit la largeur des languettes de déconnexion, soit la largeur des portions de connexion. La diminution de la largeur des pattes de connexion entraîne de réaliser une fente de retrait plus importante dans le corps creux pour avoir accès à la patte de connexion notamment la languette de déconnexion ainsi qu'une diminution de la bordure de connexion entrainant une augmentation de la résistance électrique de la borne de connexion à serrage automatique et donc un échauffement de ceux-ci pouvant entrainer des problèmes de fonctionnement. En outre, dans le cas d'une diminution de la taille de la languette de déconnexion cela entraine une fragilisation de la languette de déconnexion et notamment en cas de levier incorporer dans le dispositif électrique une fragilisation du levier.

En outre une opération de cisaillement est plus simple et moins couteuse qu'une opération par emboutissage ou de détourage entrainant chacune une perte de matière.

Il est donc nécessaire de trouver une solution simple sans diminuer le dimensionnement des languettes de déconnexion ou des portions de déconnexion.

### RESUME DE L'INVENTION

L'invention vise à remédier à tout ou partie des problèmes de l'état de la technique identifiés ci-dessus, et notamment à proposer une lame ressort comprenant une fente ayant une portion restreinte notamment cisaillée suffisamment écartée sans opération de retrait de matière. Pour cela l'invention concerne une lame ressort d'une borne de connexion à serrage automatique, la lame ressort comprenant :
- une surface interne et une surface externe,
- une branche de fixation,
- une fente principale, traversante de la surface interne à la surface externe, la fente principale s'étendant à partir d'une extrémité de la branche de fixation formant un fond de la fente et débouchant sur un bord libre de la lame ressort, la fente principale comprenant au moins une portion restreinte débouchant sur le bord libre,
- au moins une première et une deuxième pattes de connexion élastiquement déformable, reliées l'une à l'autre par la branche de fixation et séparées l'une de l'autre par la fente principale, les deux pattes de connexion ayant chacun un bord le long de la fente comprenant au moins une bordure restreinte le long de l'au moins une portion restreinte, chaque bordure restreinte comprenant une extrémité externe et une extrémité interne, le bord libre étant plus proche de l'extrémité externe que l'extrémité interne,
caractérisée en ce que la lame ressort comporte un poinçon formant, entre la surface interne et la surface externe, un fond, le fond du poinçon ayant au moins un bord formant une partie des bords délimitant la fente principale et en ce qu'un jeu entre les extrémités externes des deux bordures restreintes, est supérieur à un jeu entre les extrémités internes des deux bordures restreintes.

Ainsi le poinçon permet d'écarter la portion restreinte de la fente et ainsi diminuer le risque que les deux pattes de connexion se touchent dans cette portion restreinte. En effet, lors du poinçonnage formant une empreinte appelé poinçon, la matière flue en écartant les pattes de connexion. Cela permet ainsi d'assurer que la largeur minimum à une extrémité de la portion restreinte de la fente soit suffisante pour empêcher un disfonctionnement lors d'appuie sur une des deux pattes de connexion. L'invention permet donc d'éviter que les pattes de connexion soient en contact ensemble pendant une opération d'insertion d'un conducteur ou de retrait du conducteur pouvant entrainer de manière inopinée une libération de l'autre conducteur en déplaçant l'autre patte de connexion et donc libérant l'autre conducteur.

Dans ce dessein, un aspect de l'invention se rapporte aussi à un procédé de fabrication de la lame ressort selon l'invention. Ainsi il est proposé un procédé de fabrication d'une lame ressort comprenant une étape de découpage d'une tôle, la découpe formant une fente principale traversante d'une surface interne à une surface externe de la tôle, ayant un fond et une extrémité ouverte, la tôle découpée comprenant :
- une branche de fixation entre un bord de la tôle et le fond de la fente principale,
- une première et une deuxième pattes de connexion séparées par la fente principale,
dans lequel l'étape de découpage comprend une découpe nottament par cisaillement de la tôle formant au moins une portion restreinte de la fente principale, et une étape de poinçonnage de la tôle découpée en ayant un bord dans la fente principale écartant l'extrémité ouverte de la fente principale, formant un poinçon ayant un fond entre la surface interne et externe.

Outre les caractéristiques principales qui viennent d'être mentionnées dans le paragraphe précédent, la lame ressort ou le procédé selon l'invention peut présenter une ou plusieurs caractéristiques complémentaires parmi les suivantes, considérées individuellement ou selon les combinaisons techniquement possibles.

Selon un mode de réalisation de la lame ressort, la portion restreinte comprend des traces de cisaillement.

Selon un mode de réalisation de la lame, lame ressort comporte une épaisseur constante entre la surface interne et la surface externe. Le fond du poinçon ne faisant pas partie de la surface interne ni de la surface externe.

Selon un mode de réalisation de la lame ressort, la lame ressort comprend une surface plane à l'opposé du poinçon. Autrement dit si le poinçon est réalisé à partir de la surface interne, la surface externe est plane à l'opposé et si le poinçon est réalisé à partir de la surface externe, la surface interne est plane à l'opposé. Ainsi on a un meilleur effet de la matière qui flue pour écarter les pattes de connexion plutôt que de fluer pour former une saillie ou une déformation de la lame ressort.

Selon un mode de réalisation de la lame ressort, le bord du poinçon comporte une partie sur un bord de la première patte de connexion et une partie sur un bord de la deuxième patte de connexion. Cela permet de bien écarter les pattes de connexion l'une de l'autre afin d'écarter la portion restreinte.

Selon un exemple de ce mode de réalisation, le bord du fond du poinçon forme le fond de la fente principale rejoignant les bords des deux pattes de connexion délimitant la fente principale.

Selon un exemple de ce mode de réalisation de la lame ressort qui est une variante de l'exemple précédent, le fond du poinçon comprend deux bords, chacun des bords formant une partie du bord des pattes de connexion et dans laquelle le poinçon est situé entre la portion restreinte et le fond de la fente et est éloigné de ceux-ci.

Dans cet exemple, la lame ressort peut comprendre en outre un évidement à la racine du fond de la fente.

Cela permet de pouvoir maintenir la lame ressort pour éviter une éventuelle mise en biais de cette lame ressort par rapport à un corps de la borne de connexion à serrage automatique lorsque seule une de ses pattes de connexion est sollicitée.

Selon un mode de réalisation de la lame ressort, les pattes de connexion comprennent chacune une fente secondaire débouchant sur le bord libre et une languette de déconnexion formée entre la portion restreinte de fente principale et la fente secondaire.

Selon un exemple de ce mode de réalisation, la fente secondaire comprend une longueur inférieure à la longueur de la portion restreinte de la fente principale.

Selon un exemple de ce mode de réalisation, au moins une languette de déconnexion est courbée formant une surface concave sur une portion de la surface externe. Par exemple les deux languettes de déconnexion sont courbées sensiblement identique. Par exemple les deux languettes de déconnexion sont courbées vers la surface externe.

Selon un mode de réalisation de la lame ressort, chaque patte de connexion comprend en outre un coude plus proche du fond de la fente principale que du bord libre, formant une portion convexe sur la surface interne. Cela permet de donner une souplesse élastique et de maitriser la déformation élastique, des pattes de connexion de la lame ressort.

Selon un exemple de ce mode de réalisation, les coudes relient les pattes de connexion à la branche de fixation.

Selon un mode de réalisation de la lame ressort, qui est une variante du mode de réalisation précédent, les pattes de connexion comprennent chacune un bord de connexion destiné à appuyer sur une âme d'un conducteur et en ce que les pattes de connexions sont planes entre la branche de fixation et les bords de connexion.

Selon un mode de réalisation de la lame ressort, la fente principale comprend une portion de séparation délimitée entre le fond de la fente et la portion restreinte et en ce que la portion restreinte est moins large que la portion de séparation.

Selon un mode de réalisation, la lame ressort comprend une première épaisseur entre la surface interne et la surface externe supérieure à une deuxième épaisseur entre le fond du poinçon et la surface externe ou interne et en ce que la deuxième épaisseur a une valeur de 0,02mm à 0,08mm de moins que la première épaisseur et de préférence entre 0.05 et 0.08mm.

Selon un mode de réalisation, la largeur minimum de la portion restreinte est comprise entre 0.025mm et 0.45mm.

Selon un exemple des deux modes de réalisations précédents, et le mode de réalisation, comprenant dans lequel la lame ressort comprend, entre la branche de fixation et chacune des pattes de connexion, un coude reliant la branche de fixation à la patte de connexion correspondante, la deuxième épaisseur est comprise entre 0.03mm et 0.08mm de moins que la première épaisseur et la largeur minimum de la portion restreinte est comprise entre 0.15mm et 0.45mm.

Cela permet d'avoir un espacement suffisant pour éviter que les pattes de connexion se touchent lors d'une manipulation de l'une d'entre elles tout en évitant de modifier une fente de retrait du corps creux de la borne de connexion à serrage automatique pour avoir accès à la languette de déconnexion.

Selon un exemple des deux modes de réalisations précédents et le mode de réalisation dans lequel la lame ressort comprend, une portion plane comprenant une partie des pattes de connexion et une partie de la branche de fixation, la deuxième épaisseur est comprise entre 0.45mm et 0.08mm de moins que la première épaisseur et la largeur minimum de la portion restreinte est comprise entre 0.15mm et 0.35mm.

Selon un mode de réalisation de la lame ressort, le fond du poinçon a une forme de disque et comprend un diamètre compris entre 0.5mm et 2mm, par exemple un diamètre de 1mm.

Selon un mode de réalisation de la lame ressort, le fond du poinçon a une forme de disque.

Selon un mode de réalisation de la lame ressort, le fond du poinçon a une encoche comprenant le fond de la fente principale.

Selon un exemple, le centre du disque est à une distance de la fente de deux tiers de son rayon. Autrement dit, le fond de la fente est à une distance du centre du disque de 2/3 du rayon.

Selon un mode de réalisation de la lame ressort, la lame ressort est en inox.

Selon un mode de réalisation de la lame ressort, la lame ressort a une épaisseur entre la surface interne et la surface externe comprise entre 0.4mm et 0.3mm.

Selon un mode de réalisation de la lame ressort, la lame ressort comprend au moins une ouverture traversant la branche de fixation, pour la fixation de la branche de fixation à un corps de la borne de connexion à serrage automatique.

Selon un exemple, la lame ressort comprend deux ouvertures traversant la branche de fixation et chacune des deux ouvertures comprend une partie située dans une des deux pattes de connexion correspondante.

Cela permet de diminuer la force nécessaire pour la déformation élastique des pattes de connexion en diminuant chacun leur section à leur base.

L'invention concerne aussi une borne de connexion à serrage automatique comprenant une lame ressort selon l'invention décrite précédemment, avec ou sans les différentes caractéristiques des modes de réalisation décrits précédemment et un corps comprenant une paroi de connexion et une paroi de fixation, la branche de fixation étant assujettie à la paroi de fixation, dans laquelle les pattes de connexion comprennent chacune un bord de connexion et sont agencées par rapport à la paroi de connexion pour être chacune élastiquement déformable par rapport à la paroi de connexion lorsqu'un conducteur est inséré entre la paroi de connexion et le bord de connexion de la patte de connexion déformée élastiquement.

Selon un mode de réalisation, le corps est en laiton. Cela permet une bonne conductivité tout en ayant une bonne résistance à la corrosion.

Selon un mode de réalisation, le corps comprend une ouverture de retrait en vis-à-vis des pattes de connexion pour permettre le retrait d'un conducteur.

Selon un exemple, l'ouverture de retrait traverse la paroi de connexion.

Selon un mode de réalisation de la borne de connexion à serrage automatique, le corps comprend un coude comprenant une ouverture formant une entrée d'engagement, et les pattes de connexion sont inclinées par rapport à l'ouverture dans le coude.

Selon un mode de réalisation de la borne de connexion à serrage automatique, le corps est un corps creux comprenant deux parois de connexions séparées l'une de l'autre par une ouverture de retrait et en ce que la paroi de fixation est opposée aux deux parois de connexion, dans lequel chaque paroi de connexion est concave à l'intérieur du corps creux et forme une entrée d'engagement, et les pattes de connexion sont inclinées par rapport à l'entrée d'engagement.

Selon un mode de réalisation de la borne de connexion à serrage automatique, la lame ressort comprend deux ouvertures traversant la branche de fixation et dans laquelle l'assujetissement est réalisé à l'aide de rivet ou de soudure de la paroi de fixation à la branche de fixation.

L'invention concerne en outre un mécanisme d'appareillage électrique comprenant un socle comprenant au moins un logement, un capot fermant le logement et dans le logement au moins une borne de connexion à serrage automatique décrite précédemment avec ou sans des caractéristiques des différents modes de réalisation et au moins une connectique comprenant une broche de contact située dans le logement, reliée électriquement à la borne de connexion à serrage automatique.

Selon un mode de réalisation, le socle comprend une ouverture en face de chaque ouverture de chaque borne de connexion à serrage automatique formant une entrée d'engagement du conducteur.

Selon un mode de réalisation, le mécanisme d'appareillage électrique comprend au moins une poussette isolante électriquement, montée à pivot sur le socle et en ce que la poussette est montée en vis-à-vis d'au moins une languette de déconnexion d'une patte de connexion d'un mode de réalisation décrit précédemment, pour déformer élastiquement la patte de connexion par appuie sur la languette de déconnexion.

Selon un mode de réalisation, le nombre de bornes de connexion à serrage automatique est de deux par connectique, et en ce que les deux bornes de connexion à serrage automatique reliées à une connectique sont disposées de façon opposée l'une à l'autre de manière à avoir leur ouverture formant une entrée d'engagement d'un conducteur sur deux côtés opposés du socle.

Selon un mode de réalisation, la broche de contact comprend une alvéole de réception pour recevoir des bornes d'une fiche électrique mâle.

Par exemple le mécanisme d'appareillage électrique est un mécanisme d'appareillage d'une prise de courant.

Selon un exemple, le mécanisme d'appareillage électrique comporte deux connectiques comprenant chacune une alvéole de réception reliée chacune à deux bornes de connexion à serrage automatique.

Selon un exemple de ce mode de réalisation, le mécanisme d'appareillage électrique comprend en outre une connectique ayant une broche de raccordement faisant saillie du capot en traversant une ouverture du capot et au moins une borne de connexion à serrage automatique décrit précédemment avec ou sans des caractéristiques des différents modes de réalisation pour relier la broche de raccordement à la terre.

Selon une variante du mode de réalisation précédent, le mécanisme d'appareillage électrique comprend un contact comprenant la broche de contact ayant une borne de contact pour fermer un contact.

Par exemple, le mécanisme d'appareillage électrique est un mécanisme d'appareillage d'un interrupteur ou sectionneur ou disjoncteur.

L'invention concerne en outre un dispositif électrique comprenant un mécanisme d'appareillage électrique décrit précédemment, avec ou sans les caractéristiques des différents modes de réalisation.

Selon un mode de réalisation, le dispositif électrique est une prise de courant.

Selon exemple de ce mode de réalisation, le dispositif électrique comprend en outre un enjoliveur comprenant au moins deux ouvertures en vis-à-vis des alvéoles de la connectique lorsque deux bornes d'une fiche sont reçues dans les alvéoles.

Selon une variante du mode de réalisation précédent, le dispositif électrique est un interrupteur ou un sectionneur ou un disjoncteur.

Selon un exemple de cette variante, le dispositif électrique comporte en outre un enjoliveur de commande comprenant au moins un bouton fixé au mécanisme d'appareillage pour ouvrir ou fermer un contact.

Selon un mode de réalisation du dispositif électrique, le dispositif électrique comprend en outre une boîte d'encastrement, un support d'appareillage fixant le mécanisme d'appareillage électrique à la boîte d'encastrement.

Selon un exemple, le support d'appareillage est fixé à la boîte d'encastrement par le biais de vis, nottament en étant pincé par des têtes de vis de fixation de la boîte d'encastrement.

Selon un exemple, le support d'appareillage et le socle du mécanisme d'appareillage électrique sont formée d'une seule matière et issu d'un moule.

Selon une variante de cet exemple, le socle est clipsé au support d'appareillage.

Selon un mode de réalisation, le dispositif électrique comprend en outre une plaque d'habillage.

Selon un mode de réalisation du procédé de fabrication de la lame ressort, l'étape de la découpe comprend une étape par cisaillement réalisée à partir d'un bord libre de la tôle vers le fond de la fente formant la portion restreinte.

Selon un mode de réalisation du procédé de fabrication de la lame ressort, le découpage de la fente principale est réalisé par enlèvement de matière d'une portion de séparation et par cisaillement de la portion restreinte entre le bord libre de la tôle et la portion de séparation.

Selon un exemple de ce mode de réalisation du procédé de fabrication de la lame ressort, l'étape de découpage comprend une découpe par emboutissage enlevant une partie de la tôle formant la portion de séparation de la fente principale située entre le fond de la fente et la portion restreinte de la fente, la découpe par emboutissage étant réalisée avant la découpe par cisaillement.

Selon un mode de réalisation du procédé de fabrication de la lame qui est une variante du mode de réalisation précédent, l'étape de découpage comprend sur toute la longueur de la fente principale la découpe par cisaillement.

Selon un mode de réalisation du procédé de fabrication de la lame ressort, le poinçonnage est réalisé à une extrémité fermée de la fente principale formant le fond de la fente principale.

Selon un mode de réalisation du procédé de fabrication de la lame ressort, le poinçonnage est réalisé en insérant un poinçon dans la tôle dans une course comprise entre 0,02mm et 0,09mm.

Selon un mode de réalisation du procédé de fabrication de la lame ressort, le poinçon utilisé a une forme cylindrique et comprend un diamètre d'environ 1mm.

Selon un mode de réalisation du procédé de fabrication de la lame ressort, le poinçon utilisé a une forme cylindrique et est réalisé en ayant son centre situé à une distance de la fente de deux tiers de son rayon.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- Figure 1: une vue de face d'une lame ressort d'une borne de connexion à serrage automatique selon un exemple d'un premier mode de réalisation ;
- Figure 2 : une vue en perspective de la lame ressort représentée sur la figure 1;
- Figure 3: représente un agrandissement d'une partie de la lame ressort de la figure 1 ;
- Figure 4 : une coupe D-D de la lame ressort de la figure 1 ;
- Figure 5a : une vue de côté d'une borne de connexion à serrage automatique comprenant la lame ressort de la figure 1 ;
- Figure 5b : une vue éclatée de la borne de connexion à serrage automatique de la figure 5a ;
- Figure 6 représente une vue schématique d'un exemple d'un mécanisme d'appareillage électrique d'une prise électrique comportant des bornes de connexion à serrage selon le premier mode de réalisation ;
- Figure 7 représente schématiquement un agrandissement d'une partie du mécanisme de connexion d'une coupe I-I de la de la figure 6 ;
- Figure 8 représente une vue éclatée d'un deuxième exemple d'un mécanisme d'appareillage électrique ;
- Figure 9 : une vue de face d'une lame ressort d'une borne de connexion à serrage automatique selon un exemple d'un deuxième mode de réalisation;
- Figure 10 : une vue en perspective de la lame ressort représentée sur la figure 9 ;
- Figure 11 : un agrandissement d'une partie de la lame ressort de la figure 9 ;
- Figure 12: une vue de côté d'une borne de connexion à serrage automatique comprenant la lame ressort de la figure 9 ou 10 ou 11 ;

### DESCRIPTION DETAILLEE D'AU MOINS UN MODE DE REALISATION DE L'INVENTION

Pour plus de clarté, les éléments identiques ou similaires sont repérés par des signes de référence identiques sur l'ensemble des figures.

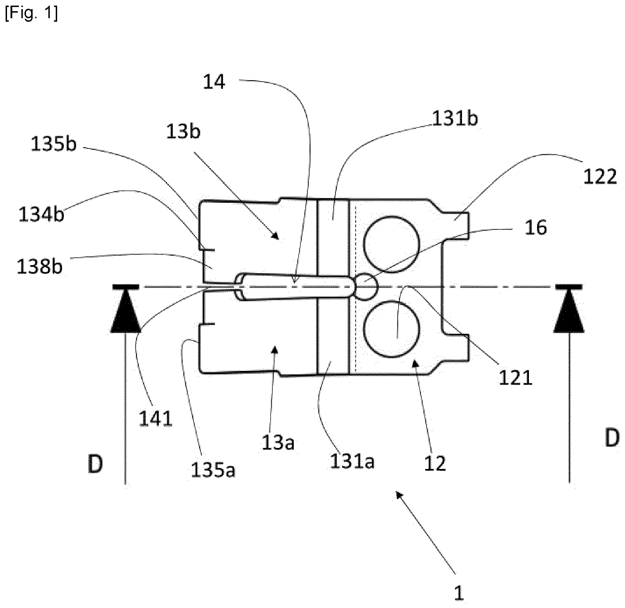

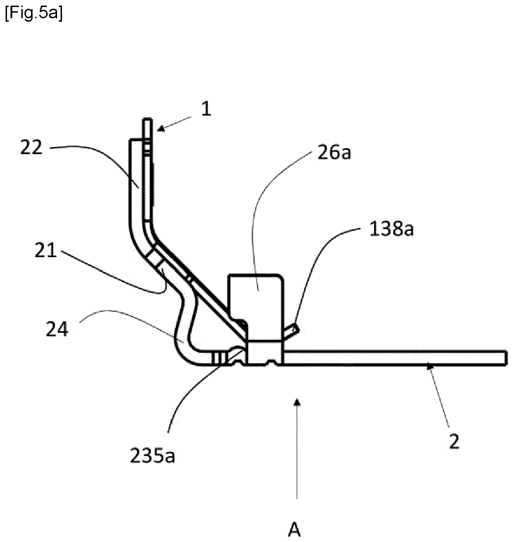

[Fig.1] représente une lame ressort 1 selon un exemple d'un premier mode de réalisation, d'une borne de connexion à serrage automatique A représentée sur la figure 5a et la figure 5b.

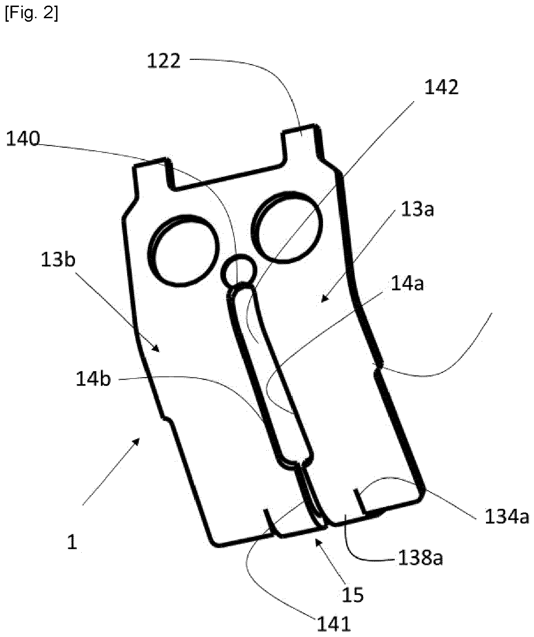

[Fig.2] représente la lame ressort 1 selon une vue en perspective.

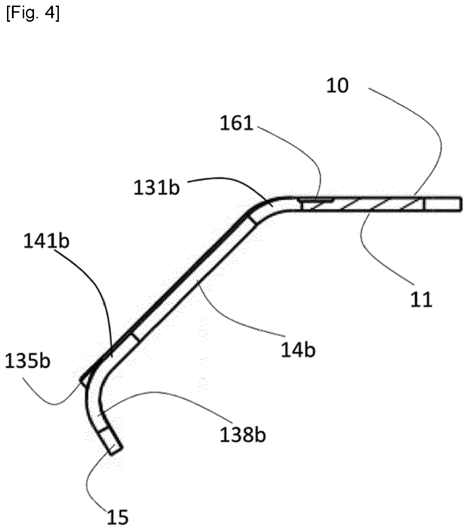

[Fig.4] représente une coupe D-D de la lame ressort 1 représentée sur la figure 1.

La lame ressort 1 comprend une surface interne 10 et une surface externe 11 référencée sur la figure 4. La surface interne 10 de la lame ressort 1 est représentée sur les figures 1 et 2. Dans cet exemple de ce mode de réalisation, la lame ressort 1 est en inox. La lame ressort 1 est dans cet exemple issue d'une tôle et donc comporte une épaisseur constante entre la surface interne 10 et la surface externe 11.

La lame ressort 1 comporte une branche de fixation 12 et deux pattes de connexion 13a et 13b reliées l'une à l'autre par la branche de fixation 12. Les deux pattes de connexion 13a et 13b s'étendent à partir de la branche de fixation 12. La lame ressort 1 comporte une fente principale 14, traversante de la surface interne 10 à la surface externe 11, séparant les deux pattes de connexion 13a et 13b.

La fente principale 14 débouche sur un bord libre 15 de la lame ressort 1. Chacune des pattes de connexion 13a et 13b comprend deux bords de connexion 135a, 135b sur le bord libre 15. La fente principale 14 s'étend à partir de la branche de fixation 12 jusqu'à ce bord libre 15.

La fente principale 14 est délimitée par un fond 140 et deux bords 14a et 14b des deux pattes de connexion 13a et 13b. Le fond 140 est donc l'extrémité la plus éloignée du bord libre 15 de la lame ressort 1 et permet de délimiter la branche de fixation 12 des pattes de connexion 13a et 13b. Plus précisément, la délimitation est formée par un plan perpendiculaire à la fente passant par le fond 140, est représentée par des pointillés sur la figure 1.

La fente principale 14 comprenant au moins une portion restreinte 141. Les bords 14a et 14b comprennent chacun dans cet exemple une bordure restreinte 141a et 141b comprenant des traces de cisaillement délimitant la portion restreinte 141. Autrement dit, la portion restreinte a été réalisée par un cisaillage d'une tôle formant la lame ressort 1.

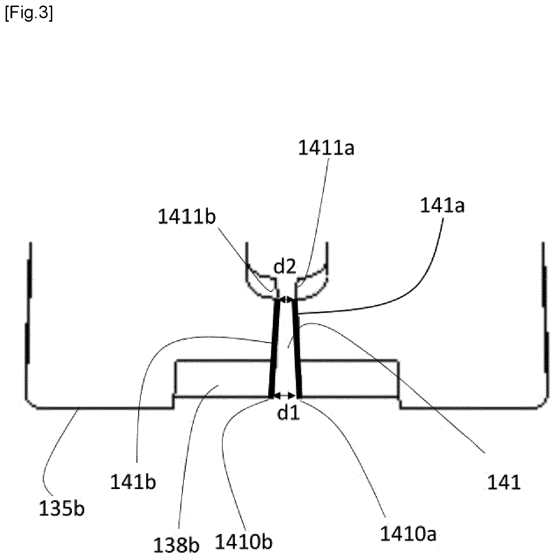

[Fig.3] représente un agrandissement de la portion restreinte 141.

Chaque bordure restreinte 141a et 141b comprennent une extrémité externe 1410a, 1410b et une extrémité interne 1411a, 1411b. Le bord libre 15 est plus proche des extrémités externe 1410a, 1410b que des extrémités interne 1411a, 1411b.

La lame ressort 1 de l'invention comprend en outre un poinçon 16 formant, entre la surface interne 10 et la surface externe 11, un fond 161 nottament référencé sur la figure 4. Dans cet exemple de ce mode de réalisation, le poinçon est formé du côté de la surface interne 10 mais pourrait être aussi formé du côté de la surface externe 11. Autrement dit, le poinçon 16 est formé à partir de la surface interne 10 mais ne fait pas partie de la surface interne.

La lame ressort 1 comprend donc une première épaisseur entre la surface interne 10 et la surface externe 11 supérieure à une deuxième épaisseur entre le fond 161 et la surface externe 11. Dans cet exemple, le poinçon 16 a une profondeur de 0.05mm. Autrement dit, la deuxième épaisseur a donc une valeur de 0.05mm de moins que la première épaisseur.

Le fond 161 du poinçon 16 comprend un bord formant une partie des bords délimitant la fente principale 16. Le poinçon 16 est situé sur le bord délimitant la fente pour permettre de fluer la matière dans la lame ressort tel qu'un jeu d1 entre les extrémités externes 1410a, 1410b des deux bordures restreintes 141a, 141b, est supérieur à un jeu d2 entre les extrémités internes 1411a, 1411b des deux bordures restreintes 141a, 141b. Ainsi on assure un écartement suffisant entre les bordures restreintes 141a, 141b des pattes de fixations 13a, 13b pour éviter un accrochage entre celles-ci. Dans cet exemple le jeu d2 a une valeur de 0.3mm permettant d'éviter un accrochage.

Plus précisément, dans cet exemple de ce mode de réalisation, le poinçon 16 est situé sur la branche de fixation 12 à la racine de la fente 16 tel qu'une partie du bord du poinçon 16 comporte une partie sur un bord de la première patte de connexion 13a et une partie sur un bord de la deuxième patte de connexion 13b. Notamment dans cet exemple, le bord du fond du poinçon forme le fond de la fente rejoignant les bords des deux pattes de connexion. Autrement dit, dans cet exemple le poinçon 16 est situé à la racine de la fente principale 14 en débordant sur chacun des deux bords des pattes de connexion 13a et 13b. Cependant, il pourrait être aussi situé entre le fond 140 de la fente principale et l'extrémité externes 1410a, 1410b des deux bordures restreintes 141a, 141b.

En l'occurrence, le fond 161 du poinçon 16 a une forme de disque, qui dans cet exemple est de 1mm de diamètre, comprenant donc une encoche formant notamment le fond 140 de la fente principale 14.

Dans cet exemple, le centre du disque du poinçon 16 est à une distance de la fente principale 16 de deux tiers de son rayon. Autrement dit, le fond 140 de la fente principale 14 est à une distance du centre du disque de 2/3 du rayon soit en l'occurrence, 0.33mm.

Dans ce mode de réalisation, les pattes de connexion 13a, 13b comprennent chacune une fente secondaire 134a, 134b débouchant sur le bord libre 15. Dans cet exemple de ce mode de réalisation, chacune des fentes secondaire 134a, 134b comprend une longueur inférieure à la longueur de la portion restreinte 141 de la fente principale 14. Chacune des pattes de connexion 13a et 13b comprennent une languette de déconnexion 138a, 138b formée entre la portion restreinte 141 et la fente secondaire 134a, 134b.

Les languettes de déconnexion 138a, 138b ont chacune, dans cet exemple de ce mode de réalisation, une forme courbée telle que des portions de la surface externe au niveau des languettes de déconnexion 138a, 138b sont concaves. Le bord libre 15 de la lame ressort 1 comprend donc les bords de connexion 135a, 135b et deux bords, dans un autre plan, des languettes de déconnexion 138a, 138b courbées.

Dans cet exemple de ce mode de réalisation, chacune des pattes de connexion 13a, 13b comprend en outre un premier et deuxième coude 131a, 131b plus proche du fond 140 de la fente principale 14 que du bord libre 15. Le premier et deuxième coude 131a, 131b forment chacune une portion convexe sur la surface interne.

Dans ce mode de réalisation, la fente principale 14 comprend une portion de séparation 142 délimitée entre le fond 140 de la fente principale 14 et la portion restreinte 141. La portion restreinte 141 est moins large que la portion de séparation 142, c'est-à-dire que les bordures restreintes 141a, 141b sont plus proche l'une de l'autre que les bordures de la portion de séparation 142.

Dans ce mode de réalisation, la lame ressort 1 comprend deux ouvertures 121 traversant la branche de fixation 12, pour l'assujettissement de la branche de fixation 12 à un corps 2 de la borne de connexion à serrage automatique A.

En outre dans cet exemple, la branche de fixation 12 comporte dans ce mode de réalisation deux ergots de montage 122 pour s'emboîter dans un logement d'un dispositif électrique.

[Fig.5a] représente une vue de côté de la borne de connexion à serrage automatique A.

[Fig.5b] représente une vue éclatée de la borne de connexion à serrage automatique A.

Le corps 2 comprend une paroi de fixation 22 et une paroi de connexion 23. La branche de fixation 12 est assujettie à la paroi de fixation 22. En l'occurrence, dans cet exemple, la paroi de fixation 22 comprend des saillies 221 insérées dans les ouvertures 121 pour guider la lame ressort 1 sur le corps 2 lors de sa fixation. La lame ressort 1 est en l'occurrence soudée aux saillies 221 de la branche de fixation 12 mais pourrait aussi être rivetée. En outre dans ce mode de réalisation, le corps 2 comporte une paroi de soutien 21 entre la paroi de fixation 22 et la paroi de connexion 23 et comprend un coude similaire aux coudes 131a, 131b, pour assoir la lame ressort 1 notamment sa branche de fixation 12, les coudes 131a, 131b et une partie des pattes de fixation 13a, 13b.

Le corps 2 comprend un coude 24 entre la paroi de connexion et la paroi de fixation et le coude 24 comprend en l'occurrence deux ouvertures 241a, 241b formant une entrée d'engagement d'un conducteur. Les pattes de connexion 13a, 13b sont inclinées par rapport à ces ouvertures 241. La paroi de connexion 23 comprend dans cet exemple de ce mode de réalisation, des bossages 235a, 235b en vis-à-vis des bords de connexion 135a, 135b pour pincer et retenir l'âme du conducteur pris en sandwich entre les bords de connexion 135a, 135b et les bossages 235a, 235b. Le corps 2 est en matière conductrice électriquement, par exemple en laiton.

La corps 2 comprend une ouverture de retrait 238 en vis-à-vis des deux languettes de déconnexion 138a, 138b pour permettre le retrait d'un conducteur en appuyant sur ces languettes de déconnexion. En l'occurrence, l'ouverture de retrait 238 traverse la paroi de connexion 23.

Les pattes de connexion 13a, 13b sont agencées par rapport à la paroi de connexion 23 pour être élastiquement déformable par rapport à la paroi de connexion 23. Autrement dit, l'âme de conducteur pris en sandwich entre les bords de connexion 135a, 135b et les bossages 235a, 235b, déforme élastiquement les pattes de connexion 13a, 13b par rapport à la paroi de connexion 23 en les pliant tels que les bords de connexion 135a, 135b s'éloignent des bossages 235a, 235b.

Ainsi, lorsqu'un conducteur est inséré par une ouverture, par exemple la première ouverture 241a, l'âme du conducteur dénudé plie la première patte de connexion 13a qui pince l'âme du conducteur pour la connecter à la paroi de connexion 23 et lorsqu'on appuie sur la première languette de déconnexion 138a à l'aide d'un organe de retrait traversant l'ouverture de retrait 238, la patte de connexion 13a se déforme en éloignant son bord de connexion 135a de l'âme du conducteur pour le retrait du conducteur.

L'organe de retrait peut être un levier isolant, pivotant d'un dispositif électrique comprenant la borne de connexion à serrage automatique A.

Le corps 2 comprend dans cet exemple de ce mode de réalisation des butées de montage 26a, 26b s'étendant de la paroi de conduction 23 pour venir en appui contre des parois d'un logement de butée d'un support d'appareillage d'un dispositif électrique.

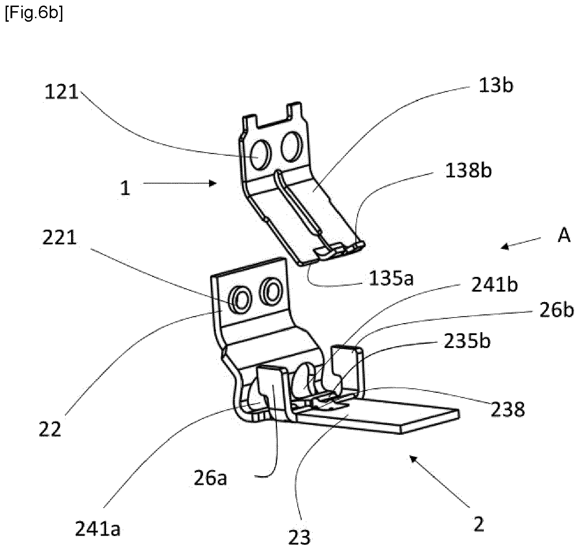

[Fig.6] représente une vue de dessus d'un mécanisme d'appareillage électrique B d'un dispositif électrique, en l'occurrence d'une prise électrique, comprenant six bornes de connexion à serrage automatique A.

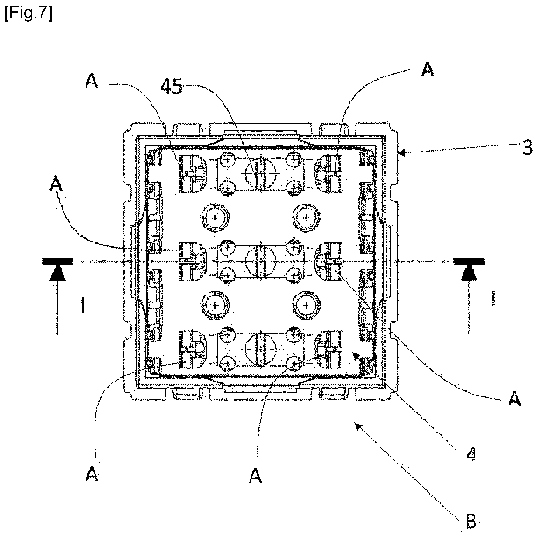

[Fig.7] représente schématiquement une partie d'une coupe I-I du mécanisme d'appareillage électrique de la figure 6.

Le mécanisme d'appareillage électrique B comprend de manière connu un socle 3 comprenant au moins un logement 30 et de manière connu un capot 4. Le mécanisme d'appareillage électrique B comprend en outre des bornes de connexion à serrage automatique A maintenues entre le capot 4 et le socle 3. Chaque borne connexion à serrage automatique A est logée dans le logement 30 et est en l'occurrence fixée par le capot 4. Dans cet exemple, le mécanisme d'appareillage électrique B comprend en l'occurrence six bornes de connexion à serrage automatique A.

Le mécanisme d'appareillage électrique B comprend une poussette 8 par borne de connexion à serrage automatique A. Seulement une poussette 8 est visible sur la figure 7. Chaque poussette 8 est en matériau isolant électriquement formant l'organe de retrait. Chaque poussette 8 est montée à pivot dans le socle 3 en vis-à-vis d'au moins une languette de déconnexion 138b pour déformer élastiquement la patte de connexion 13b par un appui sur la languette de déconnexion 138b.

Le mécanisme d'appareillage électrique B comprend de manière connu des connectiques 5, reliées chacune électriquement dans cet exemple à deux bornes de connexion à serrage automatique A. Bien entendu, il pourrait avoir qu'une seule borne de connexion à serrage automatique A par connectique 5.

La connectique 5 peut comprendre par exemple des broches de contact électriques expliquées plus en détail dans un deuxième exemple d'un mécanisme d'appareillage électrique B'.

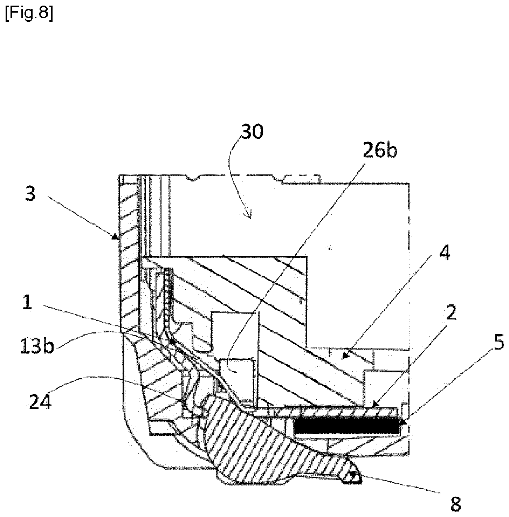

[Fig.8] représente ce deuxième exemple selon une vue éclatée. Les broches de contacts peuvent comprendre des alvéoles de réception pour recevoir des bornes d'une prise électrique mâle.

Le capot 4 comprend des ouvertures 45 pour être traversées par des bornes d'une fiche électrique rentrant dans les broches de contact électriques.

Le deuxième exemple du mécanisme d'appareillage électrique B' représenté sur la figure 8 est différent du mécanisme d'appareillage électrique B de la figure 6 et 7 en ce qu'une des connectiques 5' comprend une broche de raccordement 51' destinée à être reliée à la terre par le biais de deux bornes de connexion à serrage automatique A et en ce que la forme du capot 4' comprend une cheminée 45' traversée par la broche de raccordement 51'.

Le mécanisme d'appareillage électrique B' est représenté en éclaté et comprend aussi un socle 3, un capot 4', six bornes de connexion à serrage automatique A, trois connectiques 5, 5' et six poussettes 8.

Les deux autres connectiques 5 comprennent chacune une broche de contact électriques 51 comprenant chacune une alvéole de réception pour recevoir des bornes d'une fiche électrique mâle. Une tête de prise de la prise électrique non représentée permet de centrer les bornes d'une fiche mâle dans les alvéoles de réceptions des broches électriques. En outre dans le cas où la fiche mâle comporte une broche de réception femelle de protection à la terre, la broche de raccordement 51' rentre dans la broche de réception femelle de protection pour raccorder le dispositif électrique comprenant la fiche femelle à la terre.

Les broches de contact électrique 51 de ces deux exemples, ainsi que la broche de raccordement 51' du deuxième exemple, sont reliées chacune à deux bornes de connexion à serrage automatique A par une trace conductrice 50 fixée par exemple par soudage. Les deux bornes de connexion à serrage automatique A reliée à chacune des connectiques sont agencées de façon opposée de manière à avoir leur ouverture formant une entrée d'engagement d'un conducteur sur deux côtés opposés du socle.

Le socle comprend donc des ouvertures en vis-à-vis des ouvertures des bornes de connexion à serrage automatique formant une entrée d'engagement d'un conducteur. Le socle 3 comprend donc en l'occurrence des ouvertures sur deux côtés opposés. Cela permet d'avoir de chaque côté du socle 3 deux connexions pour faciliter la connexion des conducteurs électrique pour les utilisateurs. En effet, ainsi, l'utilisateur peut soit connecter ses deux conducteurs sur le même côté du socle 3.

Les mécanismes d'appareillage électrique B, B' des deux exemples, sont chacun destiné à être monté dans une boîte d'encastrement en fixant le socle 3, par exemple par clipsage à un support d'appareillage fixé à la boîte d'encastrement, par exemple à l'aide d'une vis. Le support d'appareillage et le socle peuvent selon un autre exemple être issu d'une même matière par moulage et être ainsi monobloc. Les mécanismes d'appareillage électrique B, B' sont en outre destinés à recevoir un enjoliveur, en l'occurrence un enjoliveur de prise de courant. L'enjoliveur peut être clipsé au socle 3 ou au capot 4 du mécanisme de connexion B.

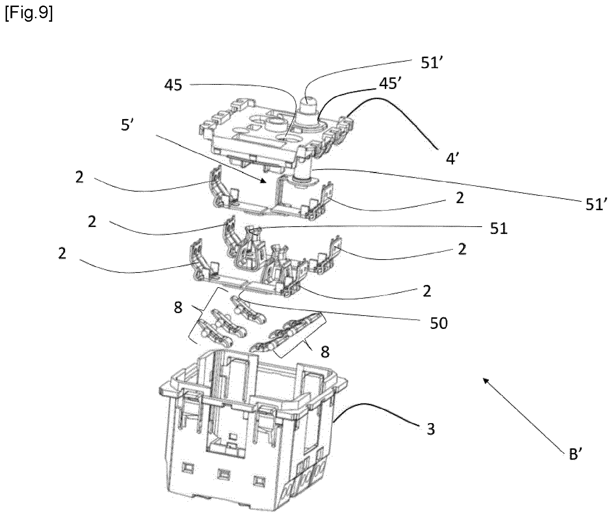

[Fig.9] représente une vue de face d'une surface externe 11' d'une lame ressort 1' d'une borne de connexion automatique A' selon un exemple d'un deuxième mode de réalisation.

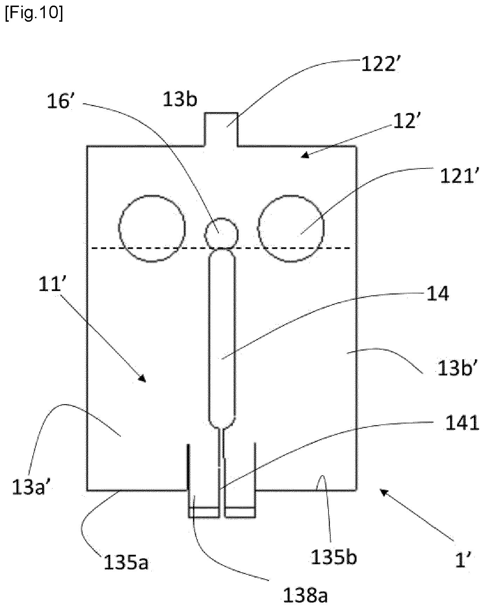

[Fig.10] représente cette lame ressort 1' selon une vue en perspective.

La lame ressort 1' est identique à la lame ressort 1 de l'exemple du premier mode de réalisation sauf en ce qui concerne les éléments décrit ci-dessous.

Dans ce mode de réalisation, la lame ressort 1' est dépourvue de coude à la base des pattes de connexion 13a, 13b contrairement à la lame ressort 1 du premier mode de réalisation comprenant deux coudes 131a, 131b. Autrement dit, les pattes de connexion 13a', 13b' sont planes entre la branche de fixation 12' et les bords de connexion 135a, 135b.

Les différentes caractéristiques citées ci-dessous sont des exemples et la lame ressort 1' du deuxième mode de réalisation peut aussi comporter les mêmes caractéristiques de l'exemple du premier mode de réalisation. A contrario, la lame ressort 1 du premier mode de réalisation peut comporter ces caractéristiques suivantes.

En outre dans cet exemple de ce deuxième mode de réalisation, chacune des deux ouvertures 121' traversant la branche de fixation 12', traverse aussi une des deux pattes de connexion 13a', 13b'. On peut voir en effet que les pointillés montrant la délimitation entre la branche de fixation 12' et les pattes de fixation 13a', 13b' traverse les ouvertures 121'. Cela permet notamment de compenser le fait de ne pas avoir de coude 131a, 131b pour diminuer la rigidité des pattes de connexion 13a' et 13b'.

Dans cet exemple de ce deuxième mode de réalisation, la branche de fixation 12' comporte un seul ergot de montage 122' central en face de la fente principale 16.

En outre dans cet exemple de ce deuxième mode de réalisation, le poinçon 16' est située du côté de la surface externe 11.

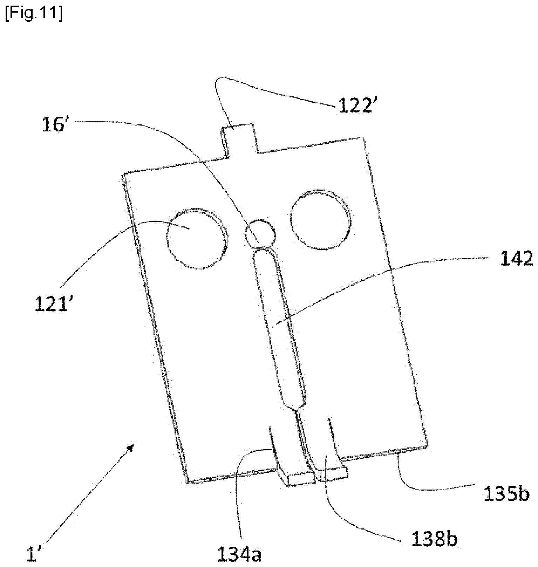

[Fig.11] représente un agrandissement de la portion restreinte 141 de la lame ressort 1 de la figure 8.

Ainsi dans cet exemple comme dans l'exemple du premier mode de réalisation, la fente principale 14 comporte la portion restreinte 141, la portion de séparation 142 et de manière identique la portion restreinte 141 comporte une distance d1 supérieure à la distance d2 dû au poinçon, comme on peut le voir sur la figure 11.

En outre, chacune des deux pattes de connexion 13a', 13b' comporte une deuxième fente 134a, 134b respectivement et deux languettes de déconnexion 138a, 138b respectivement courbées comme dans l'exemple du premier mode de réalisation.

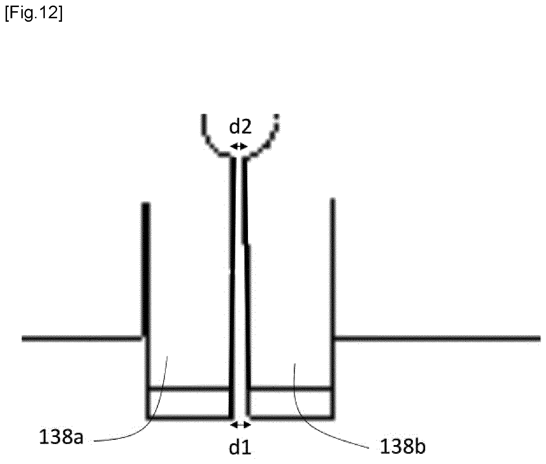

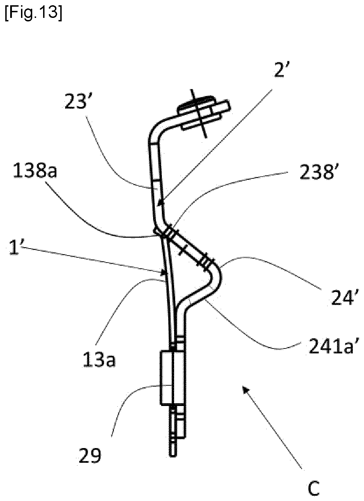

[Fig.12] représente une vue de côté d'une borne de connexion à serrage automatique C comprenant la lame ressort 1' de l'exemple du deuxième mode de réalisation.

Dans cet exemple, le corps 2' est différent du corp 2 de la borne de connexion à serrage automatique A représentée sur la figure 4 en ce qu'il ne comporte pas de paroi de soutien 21 du fait que la lame ressort 1' ne comporte pas de coude 131a, 131b.

En outre dans cet exemple, le corps 2' comporte des pates 29 pliées sur la branche de fixation 12' pour maintenir la lame ressort 1' au corps 2'.

Le corps 2' comporte aussi un coude 24' en forme de V et deux ouvertures, dont des pointillés représentent la première ouverture 241a' sur la figure 12, traversant le coude pour former une entrée d'engagement d'un conducteur. Les pattes de connexion 13a', 13b' sont donc aussi inclinées par rapport à ces ouvertures.

Le corps 2' comporte aussi une ouverture de retrait 238' en vis-à-vis des languettes de déconnexion 138a, 138b. En l'occurrence, dans cet exemple, le coude 24' comporte à son extrémité proche de la paroi de connexion 23', l'ouverture de retrait 238'.

La lame ressort 1, 1' de l'exemple du premier mode de réalisation ou du deuxième mode de réalisation est donc facile à réaliser simple et peu coûteux tout en évitant un accrochage entre les bordures restreintes 141a, 141b des pattes de connexion formant la portion restreinte 141. En effet, le procédé de fabrication d'une lame ressort tel que décrit comprend une étape de découpage d'une tôle pour former la lame ressort, la découpe formant la fente principale 14, 14' traversante de la surface interne 10 à une surface externe 11, 11' de la tôle, ayant un fond 140 et une extrémité ouverte. La tôle découpée délimite la branche de fixation 12, 12' entre un bord de la tôle et le fond 140 de la fente principale 14, 14' et la tôle découpée comprend deux pattes de connexion séparées par la fente principale 14, 14'.

L'étape de découpage comprend une découpe en l'occurrence par cisaillement de la tôle formant au moins la portion restreinte 141 de la fente principale 14, 14'. Le procédé de fabrication de la lame ressort comprend en outre une étape de poinçonnage de la tôle découpée en ayant un bord dans la fente principale 14, 14' écartant l'extrémité ouverte de la fente principale 14, 14', formant un poinçon 16, 16' ayant un fond 161 entre la surface interne 10 et la surface externe 11, 11'. Le poinçon de la lame ressort 1 de l'exemple du premier mode de réalisation est formé en poinçonnant tôle à partir de la surface interne 10 et le poinçon de la lame ressort de l'exemple du deuxième mode de réalisation est formé en poinçonnant la tôle à partir la surface externe 11. Lors de l'étape de poinçonnage, la surface externe 11 de la lame ressort 1 de l'exemple du premier mode de réalisation est positionnée sur une surface plane et la surface interne 10 de la lame ressort 1 de l'exemple du deuxième mode de réalisation est positionnée sur une surface plane. Cela permet d'éviter de diminuer l'écartement de la portion restreinte en déformant la lame formant une saillie sur la surface externe ou interne.

Les bornes de connexions des différents exemples des différents mode de réalisation peuvent être destinées à être montées dans un appareillage électrique domotique ou industriel tel qu'un disjoncteur, un interrupteur, un variateur, un contacteur, un actionneur, un sectionneur ou encore tout appareillage électrique domotique.

Naturellement, l'invention n'est pas limitée aux modes de réalisation décrits en référence aux figures et des variantes pourraient être envisagées sans sortir du cadre de l'invention.

## Revendications

1. Lame ressort (1, 1') d'une borne de connexion à serrage automatique (A, C), la lame ressort (1, 1') comprenant :
a. une surface interne (10) et une surface externe (11, 11'),
b. une branche de fixation (12, 12'),
c. une fente principale (14, 14'), traversante de la surface interne (10) à la surface externe (11, 11'), la fente principale (16, 16') s'étendant à partir d'une extrémité de la branche de fixation (12, 12') formant un fond (140) de la fente principale (14, 14') et débouchant sur un bord libre (15) de la lame ressort (1, 1'), la fente principale (14, 14') comprenant au moins une portion restreinte (141) débouchant sur le bord libre (15),
d. au moins une première et une deuxième pattes de connexion (13a, 13b, 13a', 13b') élastiquement déformable, reliées l'une à l'autre par la branche de fixation (12, 12') et séparées l'une de l'autre par la fente principale (14, 14'), les deux pattes de connexion (13a, 13b, 13a', 13b') ayant chacun un bord le long de la fente principale (14, 14') (14) comprenant au moins une bordure restreinte (141a, 141b) le long de l'au moins une portion restreinte (141), chaque bordure restreinte (141a, 141b) comprenant une extrémité externe (1410a, 1410b) et une extrémité interne (1411a, 1411b), le bord libre (15) étant plus proche de l'extrémité externe (1410a, 1410b) que l'extrémité interne (1411a, 1411b),
**caractérisée en ce que** la lame ressort (1, 1') comporte un poinçon (16, 16'), formant, entre la surface interne (10) et la surface externe (11, 11'), un fond (161), le fond (161) du poinçon (16, 16') ayant au moins un bord formant une partie des bords délimitant la fente principale (14, 14') et **en ce qu'**un jeu (d1) entre les extrémités externes (1410a, 1410b) des deux bordures restreintes (141a, 141b), est supérieur à un jeu (d2) entre les extrémités internes (1411a, 1411b) des deux bordures restreintes (141a, 141b).

2. Lame ressort (1, 1') d'une borne de connexion à serrage automatique (A, C) selon la revendication 1, **caractérisé en ce que** les pattes de connexion (13a, 13b, 13a', 13b') comprennent chacune une fente secondaire (134a, 134b) débouchant sur le bord libre (15) et une languette de déconnexion (134a, 134b) formée entre la fente principale (14, 14') et la fente secondaire (134a, 134b).

3. Lame ressort (1, 1') d'une borne de connexion à serrage automatique (A, C) selon la revendication 2, dans laquelle au moins une languette de déconnexion (134a, 134b) est courbée formant une surface concave sur une portion de la surface externe (10).

4. Lame ressort (1) d'une borne de connexion à serrage automatique (A) selon l'une des revendications précédentes, dans laquelle , chaque patte de connexion (13a, 13b) comprend en outre un coude (131a, 131b) plus proche du fond de la fente principale (14) que du bord libre (15) formant une portion convexe sur la surface interne (10).

5. Lame ressort (1') d'une borne de connexion à serrage automatique (C) selon l'une des revendications 1 à 3, dans laquelle les pattes de connexion (13a', 13b') comprennent chacune un bord de connexion (135a, 135b) destiné à appuyer sur une âme d'un conducteur et en ce que les pattes de connexion (13a', 13b') sont planes entre la branche de fixation (12') et les bords de connexion (135a, 135b).

6. Lame ressort (1, 1') d'une borne de connexion à serrage automatique (A, C) selon l'une des revendications précédentes, dans laquelle, le bord du fond (161) du poinçon (16, 16') forme le fond (140) de la fente principale (14, 14') rejoignant les bords des deux pattes de connexion délimitant la fente principale.

7. Lame ressort (1, 1') d'une borne de connexion à serrage automatique (A, C) selon la revendication précédente, dans laquelle le fond (161) du poinçon (16, 16') a une encoche comprenant le fond (140) de la fente principale (14).

8. Lame ressort (1, 1') d'une borne de connexion à serrage automatique (A, C) selon l'une des revendications précédentes dans laquelle la fente principale (14, 14') comprend une portion de séparation (142) délimitée entre le fond (140) de la fente principale (14, 14') et la portion restreinte (141) et en ce que la portion restreinte (141) est moins large que la portion de séparation (142).

9. Borne de connexion à serrage automatique (A, C) comprenant une lame ressort (1, 1') selon l'une des revendications précédentes et un corps (2, 2') comprenant une paroi de connexion (23, 23') et une paroi de fixation (22, 22'), la branche de fixation (12,12') étant assujettie à la paroi de fixation (22, 22'), dans laquelle les pattes de connexion (13a, 13b, 13a', 13b') comprennent chacune un bord de connexion et sont agencées par rapport à la paroi de connexion (23, 23') pour être chacune élastiquement déformable par rapport à la paroi de connexion (23, 23') lorsqu'un conducteur est inséré entre la paroi de connexion (23, 23') et le bord de connexion (135a, 135b) de la patte de connexion (23, 23') déformée élastiquement.

10. Mécanisme d'appareillage électrique comprenant :
a. un socle comprenant au moins un logement,
b. un capot fermant le logement et
c. dans le logement au moins une borne de connexion à serrage automatique selon la revendication précédente, et
d. au moins une connectique comprenant une broche de contact située dans le logement, reliée électriquement à la borne de connexion à serrage automatique.

11. Dispositif électrique comprenant un mécanisme d'appareillage électrique selon la revendication 10.

12. Dispositif électrique selon la revendication 11, comprenant en outre une boîte d'encastrement, un support d'appareillage fixant le mécanisme d'appareillage électrique à la boîte d'encastrement.

13. Procédé de fabrication d'une lame ressort comprenant une étape de découpage d'une tôle, la découpe formant une fente principale (14, 14') traversante d'une surface interne (10) à une surface externe (11, 11') de la tôle, ayant un fond (140) et une extrémité ouverte, la tôle découpée comprenant :
- une branche de fixation (12, 12') entre un bord de la tôle et le fond (140) de la fente principale (14, 14'),
- une première et une seconde pattes de connexion séparées par la fente principale (14, 14'),
dans lequel l'étape de découpage comprend une découpe nottament par cisaillement de la tôle formant au moins une portion restreinte (141) de la fente principale (14, 14'),
et une étape de poinçonnage de la tôle découpée en ayant un bord dans la fente principale (14, 14') écartant l'extrémité ouverte de la fente principale (14, 14'), formant un poinçon (16, 16') ayant un fond (161) entre la surface interne (10) et la surface externe (11, 11').

## Patentansprüche

1. Federblatt (1, 1') einer Verbindungsklemme mit automatischer Einspannung (A, C), wobei das Federblatt (1, 1') umfasst:
a. eine Innenfläche (10) und eine Außenfläche (11, 11'),
b. einen Befestigungszweig (12, 12'),
c. einen Hauptschlitz (14, 14'), der die Innenfläche (10) an der Außenfläche (11, 11') durchquert, wobei sich der Hauptschlitz (16, 16') ausgehend von einem Ende des Befestigungszweigs (12, 12') erstreckt und einen Boden (140) des Hauptschlitzes (14, 14') bildet und auf einem freien Rand (15) des Federblattes (1, 1') mündet, wobei der Hauptschlitz (14, 14') wenigstens einen eingeschnürten Abschnitt (141) umfasst, der auf dem freien Rand (15) mündet,
d. wenigstens eine erste und eine zweite elastisch verformbare Verbindungslasche (13a, 13b, 13a', 13b'), die miteinander durch den Befestigungszweig (12, 12') verbunden und voneinander durch den Hauptschlitz (14, 14') getrennt sind, wobei die zwei Verbindungslasche (13a, 13b, 13a', 13b') jeweils einen Rand entlang des Hauptschlitzes (14, 14') aufweisen, wobei (14, 14') wenigstens eine eingeschnürte Kante (141a, 141b) entlang des wenigstens einen eingeschnürten Abschnitts (141) umfasst, wobei jede eingeschnürte Kante (141a, 141b) ein äußeres Ende (1410a, 1410b) und ein inneres Ende (1411a, 1411b) umfasst, wobei der freie Rand (15) näher an dem äußeren Ende (1410a, 1410b) ist als das innere Ende (1411a, 1411b),
**dadurch gekennzeichnet, dass** das Federblatt (1, 1') einen Durchschlag (16, 16') umfasst, der zwischen der Innenfläche (10) und der Außenfläche (11, 11') einen Boden (161) bildet, wobei der Boden (161) des Durchschlags (16, 16') wenigstens einen Rand aufweist, der einen Teil der Ränder bildet, die den Hauptschlitz (14, 14') begrenzen, und dass ein Spiel (d1) zwischen den äußeren Enden (1410a, 1410b) der zwei eingeschnürten Kanten (141a, 141b) größer ist als ein Spiel (d2) zwischen den inneren Enden (1411a, 1411b) der zwei eingeschnürten Kanten.

2. Federblatt (1, 1') einer Verbindungsklemme mit automatischer Einspannung (A, C) gemäß Anspruch 1, **dadurch gekennzeichnet, dass** die Verbindungslasche (13a, 13b, 13a', 13b') jeweils einen sekundären Schlitz (134a, 134b), der auf dem freien Rand (15) mündet, und eine Verbindungszunge (134a, 134b), die zwischen dem Hauptschlitz (14, 14') und dem sekundären Schlitz (134a, 134b) gebildet ist, umfassen.

3. Federblatt (1, 1') einer Verbindungsklemme mit automatischer Einspannung (A, C) gemäß Anspruch 2, bei dem wenigstens eine Verbindungszunge (134a, 134b) gekrümmt ist und eine konkave Fläche auf einem Abschnitt der Außenfläche (10) bildet.

4. Federblatt (1, 1') einer Verbindungsklemme mit automatischer Einspannung (A) gemäß einem der voranstehenden Ansprüche, bei der jede Verbindungsklaue (13a, 13b) darüber hinaus eine Biegung (131a, 131b) umfasst, die näher am Boden des Hauptschlitzes (14) als am freien Rand (15) ist, der einen konvexen Abschnitt auf der Innenfläche (10) bildet.

5. Federblatt (1, 1') einer Verbindungsklemme mit automatischer Einspannung (C) gemäß einem der Ansprüche 1 bis 3, bei der die Verbindungslasche (13a', 13b') jeweils einen Verbindungsrand (135a, 135b) umfassen, der zum Aufstützen auf einen Steg eines Leiters bestimmt ist, und dass die Verbindungslasche (13a', 13b') zwischen dem Befestigungszweig (12') und den Verbindungsrändern (135a, 135b) eben sind.

6. Federblatt (1, 1') einer Verbindungsklemme mit automatischer Einspannung (A, C) gemäß einem der voranstehenden Ansprüche, bei der der Rand des Bodens (161) des Durchschlags (16, 16') den Boden (140) des Hauptschlitzes (14, 14') bildet und die Ränder der zwei Verbindungslasche, die den Hauptschlitz begrenzen, zusammenführt.

7. Federblatt (1, 1') einer Verbindungsklemme mit automatischer Einspannung (A, C) gemäß dem voranstehenden Anspruch, bei dem der Boden (161) des Durchschlags (16, 16') eine Auskerbung aufweist, die den Boden (140) des Hauptschlitzes (14) umfasst.

8. Federblatt (1, 1') einer Verbindungsklemme mit automatischer Einspannung (A, C) gemäß einem der voranstehenden Ansprüche, bei dem der Hauptschlitz (14, 14') einen Trennungsabschnitt (142) umfasst, der zwischen dem Boden (140) des Hauptschlitzes (14, 14') und dem eingeschnürten Abschnitt (141) begrenzt ist und dass der eingeschnürte Abschnitt (141) weniger breit ist als der Trennungsabschnitt (142).

9. Verbindungsklemme mit automatischer Einspannung (A, C), umfassend ein Federblatt (1, 1') gemäß einem der voranstehenden Ansprüche und einen Körper (2, 2'), umfassend eine Verbindungswand (23, 23') und eine Befestigungswand (22, 22'), wobei der Befestigungszweig (12, 12') der Befestigungswand (22, 22') unterworfen ist, bei der die Verbindungslasche (13a, 13b, 13a', 13b') jeweils einen Verbindungsrand umfassen und in Bezug auf die Verbindungswand (23, 23') angeordnet sind, um jeweils elastisch in Bezug auf die Verbindungswand (23, 23') verformbar zu sein, wenn ein Leiter zwischen der Verbindungswand (23, 23') und dem Verbindungsrand (135a, 135b) der elastisch verformten Verbindungsklaue (23, 23') eingefügt ist.

10. Elektrischer Anlagenmechanismus, umfassend:
a. einen Sockel, umfassend wenigstens eine Aufnahme,
b. eine Haube, die die Aufnahme schließt und
c. in der Aufnahme wenigstens eine Verbindungsklemme mit automatischer Einspannung gemäß dem voranstehenden Anspruch und
d. wenigstens einen Anschluss, umfassend einen in der Aufnahme angeordneten Kontaktstift, der elektrisch mit der Verbindungsklemme mit automatischer Einspannung verbunden ist.

11. Elektrische Vorrichtung, umfassend einen elektrischen Anlagenmechanismus gemäß Anspruch 10.

12. Elektrische Vorrichtung gemäß Anspruch 11, umfassend darüber hinaus einen Einbaukasten, einen Anlagenträger, der den elektrischen Anlagenmechanismus am Einbaukasten befestigt.

13. Herstellungsverfahren eines Federblatts, umfassend einen Ausschneideschritt aus einem Blech, wobei der Ausschnitt einen von einer Innenfläche (10) zu einer Außenfläche (11, 11') des Blechs durchquerenden Hauptschlitz (14, 14') bildet, der einen Boden (140) und ein offenes Ende umfasst, wobei das ausgeschnittene Blech umfasst:
- einen Befestigungszweig (12, 12') zwischen einem Rand des Blechs und dem Boden (140) des Hauptschlitzes (14, 14'),
- eine erste und eine zweite Verbindungsklaue, die durch den Hauptschlitz (14, 14') getrennt werden
bei dem der Ausschneideschritt einen Ausschnitt insbesondere per Abscheren des Blechs umfasst, das wenigstens einen eingeschnürten Abschnitt (141) des Hauptschlitzes (14, 14') bildet,
und einen Durchschlagsschritt des ausgeschnittenen Blechs, wobei es einen Rand in dem Hauptschlitz (14, 14') aufweist, der das offene Ende des Hauptschlitzes (14, 14') abspreizt und einen Durchschlag (16, 16') mit einem Boden (161) zwischen der Innenfläche (10) und der Außenfläche (11, 11') bildet.

## Claims

1. Leaf spring (1, 1') for an automatic clamping connection terminal (A, C), the leaf spring (1, 1') comprising:
a. an inner surface (10) and an outer surface (11, 11'),
b. an attachment arm (12, 12'),
c. a main slot (14, 14'), traversing from the inner surface (10) to the outer surface (11, 11'), the main slot (16, 16') extending from an end of the attachment arm (12, 12') forming a bottom (140) of the main slot (14, 14') and emerging on a free edge (15) of the leaf spring (1, 1'), the main slot (14, 14') comprising at least one restricted portion (141) emerging on the free edge (15),
d. at least one first and one second connection lugs (13a, 13b, 13a', 13b') elastically deformable, connected to one another by the attachment arm (12, 12') and separated from one another by the main slot (14, 14'), the two connection lugs (13a, 13b, 13a', 13b') each having an edge along the main slot (14, 14') comprising at least one restricted border (141a, 141b) along the at least one restricted portion (141), each restricted border (141a, 141b) comprising an outer end (1410a, 1410b) and an inner end (1411a, 1411b), the free edge (15) being closer to the outer end (1410a, 1410b) than the inner end (1411a, 1411b),
**characterised in that** the leaf spring (1, 1') comprises a punch mark (16, 16'), forming, between the inner surface (10) and the outer surface (11, 11'), a bottom (161), the bottom (161) of the punch mark (16, 16') having at least one edge forming a portion of the edges delimiting the main slot (14, 14') and **in that** a clearance (d1) between the outer ends (1410a, 1410b) of the restricted borders (141a, 141b), is greater than a clearance (d2) between the inner ends (1411a, 1411b) of the restricted borders (141a, 141b).

2. Leaf spring (1, 1') for an automatic clamping connection terminal (A, C) according to claim 1, **characterised in that** the connection lugs (13a, 13b, 13a', 13b') each comprise a secondary slot (134a, 134b) emerging on the free edge (15) and a disconnection tab (134a, 134b) formed between the main slot (14, 14') and the secondary slot (134a, 134b).

3. Leaf spring (1, 1') for an automatic clamping connection terminal (A, C) according to claim 2, wherein at least one disconnection tab (134a, 134b) is curved forming a concave surface on a portion of the outer surface (10).

4. Leaf spring (1) for an automatic clamping connection terminal (A) according to one of the preceding claims, wherein , each connection lug (13a, 13b) further comprises an elbow (131a, 131b) closer to the bottom of the main slot (14) than the free edge (15) forming a convex portion on the inner surface (10).

5. Leaf spring (1') for an automatic clamping connection terminal (C) according to one of claims 1 to 3, wherein the connection lugs (13a', 13b') each comprises a connection edge (135a, 135b) for pressing on a core of a conductor and in that the connection lugs (13a', 13b') are flat between the attachment arm (12') and the connection edges (135a, 135b).

6. Leaf spring (1, 1') for an automatic clamping connection terminal (A, C) according to one of the preceding claims, wherein, the edge of the bottom (161) of the punch mark (16, 16') forms the bottom (140) of the main slot (14, 14') joining the edges of the two connection lugs delimiting the main slot.

7. Leaf spring (1, 1') for an automatic clamping connection terminal (A, C) according to the preceding claim, wherein the bottom (161) of the punch mark (16, 16') has a notch comprising the bottom (140) of the main slot (14).

8. Leaf spring (1, 1') for an automatic clamping connection terminal (A, C) according to one of the preceding claims wherein the main slot (14, 14') comprises a separation portion (142) delimited between the bottom (140) of the main slot (14, 14') and the restricted portion (141) and in that the restricted portion (141) is less wide than the separation portion (142).

9. Automatic clamping connection terminal (A, C) comprising a leaf spring (1, 1') according to one of the preceding claims and a body (2, 2') comprising a connection wall (23, 23') and an attaching wall (22, 22'), the attachment arm (12,12') being secured to the attaching wall (22, 22'), wherein the connection lugs (13a, 13b, 13a', 13b') each comprise a connection edge and are arranged with respect to the connection wall (23, 23') to each be elastically deformable with respect to the connection wall (23, 23') when a conductor is inserted between the connection wall (23, 23') and the connection edge (135a, 135b) of the elastically deformed connection lug (23, 23').

10. Electrical equipment mechanism comprising:
a. a base comprising at least one housing,
b. a cover closing the housing and
c. in the housing at least one automatic clamping connection terminal according to the preceding claim, and
d. at least one electrical connector comprising a contact pin located in the housing, electrically connected to the automatic clamping connection terminal.

11. Electrical device comprising an electrical equipment mechanism according to claim 10.

12. Electrical device according to claim 11, further comprising a flush-mounted box, an equipment support attaching the electrical equipment mechanism to the flush-mounted box.

13. Method for manufacturing a leaf spring comprising a step of cutting a steel sheet, the cut-out forming a main slot (14, 14') traversing from an inner surface (10) to an outer surface (11, 11') of the steel sheet, having a bottom (140) and an open end, the cut steel sheet comprising:
- an attachment arm (12, 12') between an edge of the steel sheet and the bottom (140) of the main slot (14, 14'),
- a first and a second connection lugs separated by the main slot (14, 14'),
wherein the step of cutting comprises a cutting in particular by shearing of the steel sheet forming at least one restricted portion (141) of the main slot (14, 14'), and a step of punching the cut steel sheet by having an edge in the main slot (14, 14') separating the open end from the main slot (14, 14'), forming a punch mark (16, 16') having a bottom (161) between the inner surface (10) and the outer surface (11, 11').
